# FASCICULE DE BREVET EUROPEEN

(11) **EP 3 074 178 B1**
(45) Date de publication et mention de la délivrance du brevet: **13.12.2017**
(21) Numéro de dépôt: 14825383.4
(22) Date de dépôt: 28.10.2014
(51) Int. Cl.: B24B 47/22, B24B 9/14

(54) **PROCÉDÉ DE BISEAUTAGE D'UNE LENTILLE OPHTALMIQUE**
VERFAHREN ZUR BEKANTUNG EINES BRILLENGLASES
METHOD FOR BEVELLING AN OPHTHALMIC LENS

(30) Priorité: 26.11.2013 FR 1361661
(43) Date de publication de la demande: 05.10.2016
(73) Titulaire: Essilor International (Compagnie Générale d'Optique), 94220 Charenton-le-Pont (FR)
(72) Inventeur: MOLINARO, Andréa, 94227 Charenton-le-Pont (FR); BOUKOBZA, Sarah, 94227 Charenton-le-Pont (FR); PERRIER, Marc, 94227 Charenton-le-Pont (FR)
(74) Mandataire: Jacobacci Coralis Harle
(86) Numéro de dépôt international: PCT/FR2014/052744
(87) Numéro de publication internationale: WO 2015/079133

(56) Documents cités:
- EP-A1- 2 305 423
- EP-A2- 1 591 199
- FR-A1- 2 926 896

## Description

### DOMAINE TECHNIQUE AUQUEL SE RAPPORTE L'INVENTION

La présente invention concerne de manière générale le domaine de la lunetterie.

Elle concerne plus particulièrement un procédé d'élaboration d'une consigne de biseautage d'une lentille ophtalmique, en vue de son montage dans un entourage d'une monture de lunettes. Un tel procédé est connu par exemple du document EP 2 305 423 A1. L'invention trouve une application particulièrement avantageuse lorsqu'elle est implémentée dans un logiciel de pilotage d'un dispositif de centrage de lentilles ophtalmiques.

### ARRIERE-PLAN TECHNOLOGIQUE

Lorsqu'il souhaite acquérir une paire de lunettes correctrices chez un opticien, le client commence par choisir une monture de lunettes dans laquelle sont emboîtées des lentilles de présentation non correctrices.

L'opticien est alors chargé de tailler des lentilles ophtalmiques pour remplacer ces lentilles de présentation.

Pour chaque lentille ophtalmique, l'opticien procède en quatre opérations principales que sont :
- l'acquisition du contour de l'un des entourages de la monture de lunettes sélectionnée,
- le centrage de la lentille qui consiste à déterminer le référentiel optique de cette lentille puis à reporter sur cette lentille ophtalmique le contour préalablement acquis, de telle manière qu'une fois taillée suivant ce contour et montée sur la monture de lunettes, la lentille se trouve convenablement centrée en regard de la pupille de l'oeil correspondant du client,
- le blocage de la lentille ophtalmique qui consiste à fixer un accessoire de blocage sur la face avant de la lentille dans une position déterminée, afin de permettre la préhension de cette lentille tout en conservant le référentiel de cette lentille (ce qui est nécessaire lorsque la lentille passe d'un poste d'usinage à l'autre), puis
- l'usinage de la lentille qui consiste à la découper selon le contour souhaité.

Dans le cadre de la présente invention, on s'intéresse plus particulièrement aux montures de lunettes à entourages, c'est-à-dire aux montures de lunettes cerclées.

L'opération d'usinage comprend alors une étape d'ébauche pour ramener le contour initial de la lentille à une forme proche du contour souhaité, puis une étape de biseautage permettant de former sur la tranche de la lentille une nervure d'emboîtement (communément appelée biseau) apte à s'emboîter dans une rainure d'emboîtement (communément appelée drageoir) qui court le long de la face intérieure de l'entourage correspondant de la monture.

Les opérations d'acquisition et d'usinage doivent être réalisées avec soin de manière que la lentille puisse parfaitement s'emboîter dans son entourage, sans effort et « du premier coup », c'est-à-dire sans nécessiter de reprise d'usinage.

Pour acquérir la forme de l'entourage, on utilise généralement un appareil de lecture de contours comportant un palpeur qui vient glisser directement le long du drageoir de l'entourage.

Cet appareil de lecture permet alors de relever la forme du fond de drageoir afin de permettre d'usiner la lentille de telle manière que le sommet de son biseau présente une forme homologue à celle du drageoir.

L'inconvénient majeur de cette solution est qu'elle nécessite l'utilisation d'un lecteur de contours dont les coûts d'achat et de maintenance sont élevés.

Elle est par ailleurs longue à mettre en oeuvre et nécessite beaucoup de soin de la part de l'opticien, ce qui va à l'encontre du principe de simplicité recherché.

### OBJET DE L'INVENTION

Afin de remédier à cet inconvénient, la présente invention propose une solution permettant d'acquérir la forme de l'entourage de manière moins onéreuse.

Plus particulièrement, on propose selon l'invention un procédé comportant des étapes consistant à :
a) acquérir un paramètre de correction relatif au jeu entre l'entourage et la lentille de présentation,
b) capturer une image faciale de la lentille de présentation préalablement extraite de l'entourage,
c) déterminer, sur ladite image faciale, un contour initial de ladite lentille de présentation,
d) calculer un contour corrigé, en corrigeant le contour initial en fonction dudit paramètre de correction, et
e) déduire ladite consigne de biseautage en fonction dudit contour corrigé.

Pour déterminer la consigne de biseautage de la lentille ophtalmique, l'invention propose donc de se baser sur la forme de la lentille de présentation correspondante livrée avec la monture de lunettes, et non plus sur la forme de la monture.

Cette solution permet donc de se passer d'un appareil de lecture de contours. Elle est donc peu onéreuse.

Cette solution permet toutefois d'obtenir des résultats satisfaisants (évitant toute reprise d'usinage) à la seule condition qu'elle soit réalisée en tenant compte du paramètre de correction.

La demanderesse a en effet constaté que les lentilles de présentation sont généralement usinées grossièrement, si bien que leur montage dans les montures de lunettes fait généralement apparaître un jeu entre la lentille est son entourage. On comprend donc qu'une simple réplique de la forme de la lentille de présentation ne permettrait pas d'obtenir un montage satisfaisant de la lentille ophtalmique dans son entourage de monture de lunettes.

C'est la raison pour laquelle l'invention propose donc de prendre en compte le paramètre de correction.

Ce paramètre sera préférentiellement obtenu par l'utilisateur (en général l'opticien) qui, avant de démonter la lentille de présentation, vérifiera si celle-ci est montée ajustée, ou avec un jeu dans l'entourage de la monture de lunettes. Le paramètre de correction permettra alors de compenser le jeu éventuellement relevé afin d'aboutir à un montage plus précis de la lentille ophtalmique dans la monture de lunettes.

Préférentiellement, l'acquisition du cliché de la lentille de présentation sera réalisée à l'aide du dispositif du centrage de la lentille, ce qui évite d'avoir recours à un quelconque dispositif dédié à cette acquisition d'image.

Cette solution s'avère ainsi peu onéreuse, rapide et simple à mettre en oeuvre.

Cette solution ne nécessitant aucune modification technique du dispositif de centrage mais seulement une modification logicielle, elle pourra en outre être implantée dans les logiciels de pilotage des dispositifs de centrage existants.

D'autres caractéristiques avantageuses et non limitatives du procédé conforme à l'invention sont les suivantes :
- ladite monture de lunettes comportant un second entourage dans lequel est initialement emboîtée une seconde lentille de présentation, à l'étape a), on acquiert un second paramètre de correction relatif au jeu entre le second entourage et la seconde lentille de présentation, et, à l'étape d), on calcule un second contour corrigé en opérant une symétrie et une correction dudit contour initial en fonction dudit second paramètre de correction ;
- à l'étape a), le paramètre de correction est sélectionné dans une liste comprenant entre trois et cinq valeurs ;
- à l'étape d), le contour corrigé est calculé en fonction d'un autre paramètre de correction relatif au matériau de la lentille ophtalmique ;
- à l'étape d), le contour corrigé est calculé en fonction d'un autre paramètre de correction relatif au matériau de la monture de lunettes ;
- à l'étape d), le contour corrigé est calculé en fonction d'un autre paramètre de correction relatif au mode de montage prévu, à froid ou à chaud, de la lentille ophtalmique dans l'entourage de la monture de lunettes ;
- à l'étape d), le contour corrigé est calculé en fonction d'un autre paramètre de correction relatif à la puissance optique de la lentille ophtalmique ;
- à l'étape d), le contour corrigé est calculé en fonction d'un autre paramètre de correction relatif à l'épaisseur de la lentille ophtalmique ;
- à l'étape d), le contour corrigé est calculé en fonction d'un autre paramètre de correction relatif à la volonté de l'utilisateur de monter la lentille ophtalmique dans l'entourage de la monture de lunettes avec ou sans jeu ;
- à l'étape b), ladite image faciale de la lentille de présentation est acquise au moyen d'un dispositif centreur qui comporte un support pour la lentille de présentation, d'un côté de ce support, une plaque réfléchissante, et, de l'autre côté de ce support, des moyens d'éclairage et des moyens de capture d'image.

L'invention concerne également une méthode de préparation d'une lentille ophtalmique en vue de son montage dans un entourage d'une monture de lunettes dans laquelle est initialement emboîtée une lentille de présentation biseautée, comprenant :
- une étape d'élaboration d'une consigne de biseautage de la lentille ophtalmique selon un procédé tel que précité, au cours duquel le contour corrigé est calculé en fonction d'au moins un coefficient déduit dudit paramètre de correction,
- une étape de biseautage de la lentille ophtalmique selon la consigne de biseautage, puis, si la lentille ophtalmique n'est pas adaptée à être montée dans l'entourage,
- une étape de reprise du biseautage de la lentille ophtalmique de telle manière que la lentille soit adaptée à être montée dans l'entourage,
- une étape de capture d'une image faciale de la lentille ophtalmique reprise,
- une étape de détermination, sur ladite image faciale, d'un contour repris de ladite lentille ophtalmique reprise, et
- une étape de correction dudit coefficient en fonction de la différence entre le contour repris et le contour corrigé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1A est une vue schématique en perspective d'une monture de lunettes cerclée, comportant deux entourages dans chacun desquels est emboîtée une lentille de présentation ;
- la figure 1B est une vue schématique en coupe selon le plan A-A de la figure 1A ;
- la figure 2 est une vue schématique en perspective d'une lentille ophtalmique non détourée ;
- la figure 3 est une vue faciale de la lentille ophtalmique non détourée de la figure 2, sur laquelle sont représentés le contour initial de l'une des lentilles de présentation de la figure 1 et un contour corrigé selon un procédé conforme à l'invention ;
- la figure 4 est une vue schématique en perspective d'un appareil centreur-bloqueur adapté à mettre en oeuvre le procédé selon l'invention ; et
- la figure 5 est une vue schématique des moyens de centrage de l'appareil centreur-bloqueur de la figure 4.

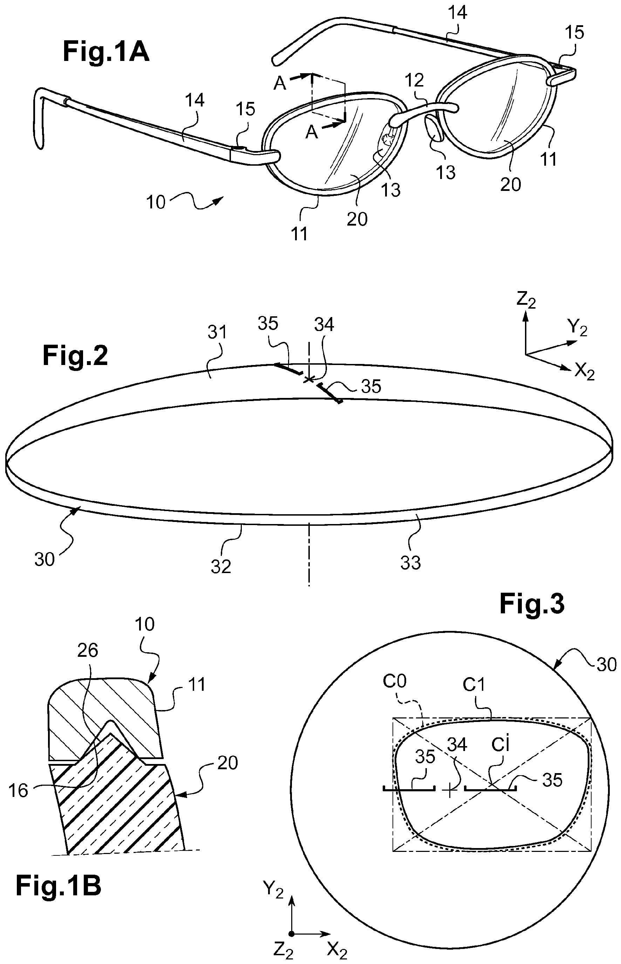

Sur la figure 1A, on a représenté une monture de lunettes 10 cerclée.

Cette monture de lunettes 10 comporte deux entourages 11 (communément appelés « cercles ») accueillant chacun une lentille de présentation 20.

Une telle lentille de présentation 20 se présente généralement sous la forme d'un verre non correcteur, qui est livré à l'opticien avec la monture de lunettes 10. Ainsi équipée de deux lentilles de présentation 20, la monture de lunettes 10 se présente sous une forme proche de celle qu'elle présentera lorsqu'elle sera équipée de lentilles ophtalmiques correctrices, ce qui facilite au client le choix d'une monture de lunettes.

Les deux cercles 11 sont reliés l'un à l'autre par un pont ou pontet 12. Ils sont en outre chacun équipés d'une plaquette nasale 13 apte à reposer sur le nez du porteur et d'une branche 14 apte à reposer sur l'une des oreilles du porteur. Chaque branche 14 est articulée sur le cercle correspondant au moyen d'un barillet 15.

Comme le montre la vue en coupe de la figure 1B, les cercles 11 de la monture de lunettes 10 présentent chacun une face intérieure dans laquelle est ménagée une rainure d'emboîtement (communément appelée « drageoir 16 ») de section généralement en forme de dièdre.

Pour s'emboîter dans ces deux cercles 11, les lentilles de présentation 20 présentent chacune un champ le long duquel est ménagée une nervure d'emboîtement (communément appelée « biseau 26 ») de section généralement en forme de dièdre.

Sur la figure 2, on a représenté une lentille ophtalmique 30 non détourée, qui est prévue pour être usinée puis montée dans l'un des cercles 11 de la monture de lunettes 10, en lieu et place de l'une des lentilles de présentation 20.

Comme le montre la figure 3, la lentille ophtalmique 30 présente deux faces optiques avant 31 et arrière 32, et une tranche 33.

La face optique avant 31 est ici sphérique et présente un rayon de courbure connu.

La tranche 33 de la lentille présente un contour initial circulaire. La lentille ophtalmique 30 est toutefois destinée à être détourée à la forme du cercle 11 correspondant de la monture de lunettes 10, de manière à pouvoir être emboîtée dans celui-ci.

La lentille ophtalmique 30 est plus précisément destinée à être détourée pour présenter sur sa tranche 33 une nervure d'emboîtement (ou biseau) apte à s'emboîter dans le drageoir 16 du cercle 11 correspondant de la monture de lunettes 10.

Cette lentille ophtalmique 30 présente des caractéristiques optiques adaptées aux besoins du porteur de lunettes. Elle présente en particulier des propriétés de réfringence sphérique, cylindrique et prismatique qui sont propres au porteur.

Cette lentille ophtalmique 30 est en outre pourvue de marquages 34, 35 qui permettent un repérage commode du référentiel optique de la lentille ophtalmique 30 pour son montage sur la monture de lunettes 10 sélectionnée par le porteur. Ces marquages consistent ici en des marquages provisoires 34, 35 à l'encre.

Ici, pour simplifier l'exposé, on considérera le cas d'une lentille ayant une puissance optique exclusivement sphérique.

Ces marquages comportent alors une croix de centrage 34 permettant de repérer la position du point de centrage de la lentille, c'est-à-dire le point où le rayon incident et le rayon transmis ont même axe. Ils comportent en outre, de part et d'autre de cette croix de centrage 34, deux traits d'horizon 35 repérant l'horizontale de la lentille ophtalmique 30.

On caractérise alors le référentiel optique de la lentille ophtalmique 30 par un repère orthonormé comportant un axe horizontal X2 parallèle auxdits traits d'horizon 35, un axe d'ordonnée Y2, et un axe normal Z2 qui est perpendiculaire au plan tangent à la face avant de la lentille ophtalmique 30 au point de centrage 34.

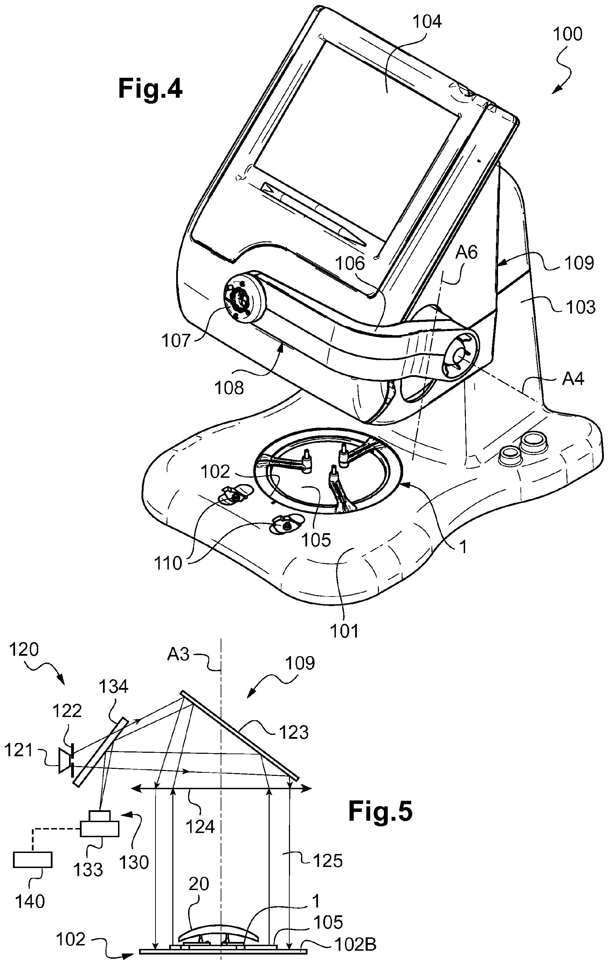

Sur la figure 4, on a représenté un appareil centreur-bloqueur 100.

Un tel appareil est généralement employé pour mettre en oeuvre des opérations de centrage et de blocage de la lentille ophtalmique 30 à monter sur la monture de lunettes 10.

L'objectif de l'opération de centrage est de repérer le référentiel de la lentille ophtalmique 30, et de déterminer la position que doit occuper le contour selon lequel la lentille doit être découpée, afin que la lentille, une fois détourée suivant ce contour puis montée sur la monture de lunettes, se retrouve convenablement centrée en regard de l'oeil correspondant de l'individu.

L'objectif de l'opération de blocage est de déposer un accessoire de blocage sur la lentille ophtalmique qui puisse permettre, d'une part, de faciliter la saisie de la lentille afin de la transporter depuis l'appareil centreur-bloqueur 100 jusqu'à une meuleuse, et, d'autre part, de fournir un repère stable permettant d'indiquer la position du référentiel de la lentille à l'issue de son transport.

L'appareil centreur-bloqueur 100 comporte à cet effet :
- un bâti 103,
- un pupitre de travail 101 fixé au bâti 103 et qui repose sur un plan horizontal (par exemple sur une table),
- un écran d'affichage 104 tactile, fixé sur le bâti 103 et orienté de telle sorte qu'il est visible pour l'opticien travaillant au pupitre de travail 101,
- des moyens de centrage 109 de la lentille, fixés au bâti 103, et
- des moyens de blocage 108, montés mobiles sur le bâti 103.

Le pupitre de travail 101 comporte un plan de travail horizontal qui s'ouvre sur une zone de chargement 102 d'une lentille ophtalmique.

Cette zone de chargement 102 comporte en l'espèce un plateau d'appui 105 transparent et plat, qui obture une ouverture circulaire prévue dans le plan de travail horizontal, et un support 1 de lentille ophtalmique. Ce support 1 se présente ici sous la forme d'un trépied posé sur le plateau d'appui 105.

Les moyens de blocage 108 comportent pour leur part un bras de manoeuvre 106 équipé d'une pince 107 adaptée à saisir un accessoire de blocage préalablement disposé sur un réceptacle 110 et à venir le déposer en un emplacement déterminé sur la face avant d'une lentille ophtalmique.

Tel que représenté sur la figure 4, le bras de manoeuvre 106 est auto-motorisé. Il présente alors une mobilité en translation suivant un axe A6 pour monter ou descendre vers la zone de chargement 102 et une mobilité en rotation autour d'un axe A4 orthogonal à l'axe A6 pour s'écarter ou se rapprocher de la zone de chargement 102.

Les moyens de centrage 109 de la lentille ophtalmique sont quant à eux conçus pour déterminer la position du référentiel de la lentille ophtalmique 30 posée sur le trépied 1, en repérant la position et l'orientation de différentes marques de centrage 34, 35 peintes ou gravées sur la face avant 31 de la lentille ophtalmique 30.

Comme le montre la figure 5, ces moyens de centrage 109 comportent des moyens d'éclairage 120 de la lentille ophtalmique 30, des moyens d'acquisition 130 d'une image de la lentille ophtalmique 30 éclairée par les moyens d'éclairage 120, et des moyens de traitement 140 pour analyser l'image acquise.

Dans le mode de réalisation préféré de l'invention, les moyens d'éclairement 120 et les moyens d'acquisition 130 sont situés sur un même côté de la zone de chargement 102.

Un réflecteur 102B est alors installé de l'autre côté de la zone de chargement 102, sous le plateau d'appui 105, pour réfléchir la lumière. Ce réflecteur 102B est ici formé par un miroir fixe.

Les moyens d'éclairage 120 comprennent ici une source de lumière étendue 121 rendue ponctuelle par l'utilisation d'une plaque perforée 122, qui émet un faisceau lumineux divergent. Ils comprennent également un miroir 123 incliné à 45° qui réfléchit ce faisceau lumineux divergent et qui permet de réduire l'encombrement de l'ensemble, et une lentille convergente 124 adaptée à former un flux lumineux 125 à rayons parallèles en direction du trépied 1.

Les moyens d'acquisition 130 comprennent quant à eux, outre le miroir 123, un miroir semi-réfléchissant 134 incliné à 45° et une caméra numérique 133 pour acquérir au moins une image. Le miroir semi-réfléchissant 134, placé devant la source de lumière, permet de transmettre une partie de la lumière vers la lentille et permet de réfléchir en partie l'image de la lentille vers la caméra numérique 133. Ainsi la caméra 130 est-elle adaptée à acquérir une image de la lentille ophtalmique 30 placée sur le trépied 1, sur laquelle apparaissent notamment le contour de la lentille ophtalmique 30 et les marques de centrage 34, 35.

De la même manière, la caméra 130 serait parfaitement adaptée à acquérir une image de l'une des lentilles de présentation 20 placée à cet effet sur le trépied 1, sur laquelle apparaitrait notamment le contour initial C0 de cette lentille de présentation 20.

Les moyens de traitement d'images font partie intégrante du système électronique de pilotage 140 du dispositif centreur-bloqueur 100.

Ce système électronique de pilotage, appelé dans la suite de cet exposé « calculateur 140 », comporte un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 140 est adapté à recevoir des signaux d'entrée, notamment de la caméra 133 et de l'écran d'affichage 104 tactile.

Grâce à un logiciel mémorisé dans sa mémoire morte, le calculateur 140 est adapté à traiter les images acquises par la caméra 133 et les informations saisies sur l'écran d'affichage 104 pour en déduire une consigne de biseautage CONS de la lentille ophtalmique 30.

Enfin, grâce à ses interfaces de sortie, le calculateur 140 est adapté à transmettre cette consigne de biseautage CONS à la meuleuse.

Pour monter deux lentilles ophtalmiques 30 dans les deux cercles 11 de la monture de lunettes 10, l'opticien procède alors en trois opérations principales que sont :
- l'acquisition des contours selon lesquels détourer les lentilles ophtalmiques 30,
- le centrage et le blocage des lentilles au moyen du dispositif centreur-bloqueur 100, puis
- l'usinage des lentilles 100 qui consiste à les découper selon les contours souhaités, compte tenu des paramètres de centrage définis, à l'aide d'une meuleuse.

Les opérations de centrage, de blocage et d'usinage étant bien connues de l'homme du métier, elles ne seront pas ici décrites.

L'invention porte en revanche sur une nouvelle méthode d'acquisition des contours selon lesquels détourer les lentilles ophtalmiques 30.

Elle porte plus exactement sur un procédé d'élaboration des consignes de biseautage CONS à transmettre à la meuleuse pour permettre à cette dernière de découper les lentilles ophtalmiques 30 selon des contours adaptés aux formes des cercles 11 de la monture de lunettes 10.

Selon une caractéristique particulièrement avantageuse de l'invention, ce procédé comporte :
- une première étape d'acquisition d'un paramètre de correction P1 relatif au jeu entre l'entourage 11 et la lentille de présentation 20 considérée,
- une seconde étape de capture d'une image faciale de la lentille de présentation 20 préalablement extraite de l'entourage 11,
- une troisième étape de détermination, sur ladite image faciale, d'un contour initial C0 de ladite lentille de présentation 20,

- une quatrième étape de calcul d'un contour corrigé C1, en corrigeant le contour initial C0 en fonction au moins dudit paramètre de correction P1, et
- une cinquième étape de déduction de ladite consigne de biseautage CONS en fonction dudit contour corrigé C1.

Comme cela sera décrit dans la suite de cet exposé, lors de la quatrième étape, le calcul du contour corrigé C1 pourra éventuellement être opéré en fonction d'autres paramètres de correction choisis dans la liste suivante :
- un paramètre de correction P2 relatif au matériau de la lentille ophtalmique 30,
- un paramètre de correction P3 relatif au matériau de la monture de lunettes,
- un paramètre de correction P4 relatif au mode de montage prévu, à froid ou à chaud, de la lentille ophtalmique 30 dans l'entourage 11 de la monture de lunettes 10,
- un paramètre de correction P5 relatif à la puissance optique de la lentille ophtalmique 30,
- un paramètre de correction P6 relatif à l'épaisseur de la lentille ophtalmique 30,
- un paramètre de correction P7 relatif à la volonté de l'utilisateur de monter la lentille ophtalmique 30 dans l'entourage 11 de la monture de lunettes 10 avec ou sans jeu (certains opticiens préférant en effet prévoir un léger jeu entre la lentille et son cercle pour faciliter son emboîtement).

En pratique, l'opticien opère de la manière suivante.

Au cours de la première étape, l'opticien démarre l'appareil centreur-bloqueur 100, ce qui a pour effet d'initier son calculateur 140.

Le calculateur 140 commande alors l'affichage sur l'écran d'affichage 104 d'un menu invitant l'opticien à saisir un paramètre de correction P1 pour chacune des deux lentilles de présentation 20.

Ici, ce menu est divisé en deux parties correspondant respectivement aux deux lentilles de présentation 20 gauche et droite.

Chacune de ces parties invite l'opticien à sélectionner l'un ou l'autre de trois boutons sur lesquels apparaissent les mentions « aucun jeu », « faible jeu », « jeu important ».

Pour déterminer lequel des boutons sélectionner, l'opticien manipule alors la paire de lunettes 10 équipée de ses lentilles de présentation 20 de manière à vérifier la qualité de l'assemblage de chacune des lentilles de présentation 20 dans les cercles 11.

Il peut ainsi facilement constater, pour chaque lentille de présentation 20 :
- si elle est montée avec un jeu important dans son cercle 11 (la lentille étant taillée trop petite, elle bouge en effet dans le cercle 11),
- si elle est montée avec un faible jeu dans son cercle 11 (la lentille étant taillée un peu grande, elle se déboîte facilement de son cercle 11),
- si elle est montée sans jeu dans son cercle 11 (la lentille est correctement maintenue dans le cercle 11).

Alors, pour chaque lentille de présentation 20, l'opticien sélectionne sur l'écran d'affichage 104 le bouton correspondant au jeu constaté.

C'est ainsi que le calculateur 140 acquiert les paramètres de correction P1 affectés aux deux lentilles de présentation 20.

Une fois ce premier menu validé, le calculateur 140 commande alors l'affichage sur l'écran d'affichage 104 d'un second menu invitant l'opticien à saisir les paramètres de correction P2 relatifs aux matériaux des lentilles ophtalmiques 30.

Ici encore, ce menu est divisé en deux parties correspondant respectivement aux deux lentilles ophtalmiques 30 gauche et droite.

Chacune de ces parties invite l'opticien à sélectionner l'un ou l'autre de six boutons sur lesquels apparaissent les mentions :
- « organique » (dont on sait que l'indice est égal à 1,5),
- « organique indice moyen » (dont on sait que l'indice est égal à 1,6),
- « organique indice haut » (dont on sait que l'indice est égal à 1,75),
- « Trivex® » (dont on sait que l'indice est égal à 1,53),
- « minéral » (dont on sait que l'indice est égal à 1,5),
- « polycarbonate » (dont on sait que l'indice est égal à 1,59).

Alors, pour chaque lentille ophtalmique 30, l'opticien sélectionne sur l'écran d'affichage 104 le bouton correspondant au matériau de la lentille ophtalmique 30.

Une fois ce second menu validé, le calculateur 140 commande l'affichage sur l'écran d'affichage 104 d'un troisième menu invitant l'opticien à saisir les paramètre de correction P3 (relatif au matériau de la monture de lunettes 10) et P4 (relatif au mode de montage prévu, à froid ou à chaud, des lentilles ophtalmiques 30 dans leurs cercles 11).

Ce menu invite l'opticien à sélectionner l'un ou l'autre de deux boutons sur lesquels apparaissent les mentions « monture plastique » et « monture métallique », puis l'un ou l'autre de deux boutons sur lesquels apparaissent les mentions « montage à froid » et « montage à chaud ».

L'opticien sélectionne alors les boutons correspondant au matériau de la monture de lunettes 10 sélectionnée par le client et au mode de montage qu'il utilisera pour emboîter les lentilles ophtalmiques 30 dans la monture de lunettes 10.

Une fois ce troisième menu validé, le calculateur 140 commande l'affichage sur l'écran d'affichage 104 d'un quatrième menu invitant l'opticien à saisir les paramètres de correction P5 relatifs aux propriétés de réfringence sphérique et/ou cylindrique et/ou prismatique des deux lentilles ophtalmiques 30.

Ici, ce menu est divisé en deux parties correspondant respectivement aux deux lentilles ophtalmiques 30 gauche et droite.

Chacune de ces parties invite l'opticien à saisir les valeurs numériques correspondant aux puissances sphériques des lentilles ophtalmiques 30.

Enfin, une fois ce quatrième menu validé, le calculateur 140 commande l'affichage sur l'écran d'affichage 104 d'un cinquième et dernier menu invitant l'opticien à saisir le paramètre de correction P7 relatif à la volonté de l'utilisateur de monter les lentilles ophtalmiques 30 dans la monture de lunettes 10 avec ou sans jeu.

Ce menu invite l'opticien à sélectionner l'un ou l'autre de deux boutons sur lesquels apparaissent les mentions « montage sans jeu » et « montage avec jeu léger ».

L'opticien sélectionne alors le bouton correspondant à son souhait.

La saisie de ce paramètre de correction P7 sera nécessaire dans un premier temps, à la suite de l'acquisition du dispositif centreur-bloqueur 100.

On pourra prévoir que, si le calculateur 140 constate que le paramètre de correction P7 choisi par l'opticien est toujours le même, il n'affiche plus ce cinquième menu et considère que ce paramètre ne change pas.

Au cours d'une seconde étape, l'opticien extrait l'une des lentilles de présentation 20 hors de la monture de lunettes 10, de manière à pouvoir acquérir la forme de son contour initial C0.

En pratique, l'opticien choisit la lentille de présentation 20 qui est montée avec le moins de jeu dans son cercle 11. C'est en effet son contour initial C0 qui constituera la meilleure base de travail pour déterminer le contour corrigé C1 selon lequel détourer les lentilles ophtalmiques 30.

L'opticien place ensuite cette lentille de présentation 20 dans le dispositif centreur-bloqueur 100, de manière que sa face arrière concave repose sur le trépied 1 de ce dispositif centreur-bloqueur 100.

Dans cette position, comme le montre la figure 5, l'axe central A3 de la lentille de présentation 20 (c'est-à-dire l'axe qui passe par le point central de la face avant de la lentille de présentation 20 et qui est orthogonal au plan tangent à la face avant de la lentille de présentation 20 au niveau de ce point central) est sensiblement parallèle aux rayons de lumière qui arrivent sur la lentille.

La caméra 133 peut ainsi acquérir une image faciale de la lentille de présentation 20, c'est-à-dire une image dans un plan orthogonal à l'axe central A3.

Au cours d'une troisième étape, grâce à cette image, le calculateur 140 peut déterminer et mémoriser la géométrie bidimensionnelle du contour initial C0 de cette lentille de présentation 20.

Cette étape de détermination ne nécessite aucun développement particulier du logiciel de pilotage du dispositif centreur-bloqueur 100, puisqu'un tel dispositif centreur-bloqueur est nativement prévu pour repérer le contour d'une lentille ophtalmique à centrer.

En l'occurrence, le contour initial C0 relevé correspond à la courbe décrite par le sommet du biseau 26 de la lentille de présentation 20.

Ce contour initial C0 pourra être mémorisé sous la forme d'une fonction mathématique.

On considérera ici qu'il est mémorisé sous la forme d'un ensemble de n-doublets correspondant aux coordonnées bidimensionnelles de n-points caractérisant la forme du contour initial C0.

Un ensemble de 360 points sera ici utilisé.

Au cours d'une quatrième étape, le calculateur 140 va corriger la forme de ce contour initial C0 de manière à assurer un montage « du premier coup » (c'est-à-dire qui ne nécessitera pas de reprise d'usinage) des lentilles ophtalmiques 30 dans leurs cercles 11.

Le contour corrigé C1 qui sera calculé en premier sera celui de la lentille ophtalmique 30 à engager dans le cercle 11 duquel a été extraite la lentille de présentation 20 (celle dont une image a été acquise).

En pratique, le calcul du contour corrigé C1 consistera ici à opérer une homothétie sur le contour initial C0, de rapport k et de centre A1.

Le centre A1 de cette homothétie pourra être constitué d'un point quelconque compris à l'intérieur du contour initial C0.

Ici, comme le montre la figure 3, il s'agira du « centre-boxing Ci » du contour initial C0, c'est-à-dire du centre du rectangle qui est circonscrit au contour initial C0 et dont deux des côtés sont parallèles aux traits d'horizon 35.

Le rapport k de cette homothétie sera quant à lui déterminé en fonction des paramètres de correction P1, P2, P3, P4, P5 et P7.

Il pourra ainsi par exemple être déterminé de la manière suivante.

Le premier cas i) à considérer est celui où le paramètre P1 saisi par l'opticien indique que la première lentille de présentation 20 était montée sans jeu dans son cercle 11.

Dans ce cas i), le calculateur 140 affecte au rapport k la valeur 1, quelles que soient les valeurs des autres paramètres de correction P2, P3, P4, P5 et P7.

On comprend alors que le contour corrigé C1 sera dans ce cas identique au contour initial C0.

Le second cas ii) à considérer est celui où le paramètre P1 saisi par l'opticien indique que la première lentille de présentation 20 était montée avec du jeu dans son cercle 11.

Alors, si le paramètre P1 indique que la première lentille de présentation 20 était montée avec un jeu réduit dans son cercle 11, le calculateur 140 affecte au rapport k₀ la valeur 1,015.

Sinon, si le paramètre P1 indique que la première lentille de présentation 20 était montée avec un jeu important dans son cercle 11, le calculateur 140 affecte au rapport k₀ la valeur 1,025.

Dans ce second cas ii), le rapport k₀ est ensuite affiné en fonction des autres paramètres de correction P2, P3, P4, P5 et P7.

Ainsi, si le paramètre de correction P2 (relatif au matériau de la lentille ophtalmique 30) indique que l'indice de la lentille ophtalmique 30 est compris entre 1,5 et 1,6 (ce qui signifie que la lentille peut être considérée comme souple), le rapport k₀ peut être légèrement augmenté. La souplesse de la lentille ophtalmique 30 autorisera en effet un montage un peu plus serré de la lentille ophtalmique 30 dans son cercle 11.

En pratique, le nouveau rapport k₁ pourra être calculé selon la formule suivante :
k₁ = k₀ + a, a étant une constante lue dans la mémoire morte du calculateur, dont la valeur dépend du matériau de la lentille ophtalmique 30, et qui est obtenue de manière empirique. Plus l'indice n sera élevé, plus cette constante a sera faible.

Si le paramètre de correction P3 (relatif au matériau de la monture de lunettes 10) indique que la monture de lunettes 10 peut être considérée comme souple (car en plastique), le rapport k₁ peut être légèrement augmenté. La souplesse de la monture permettra en effet un montage un peu plus serré de la lentille ophtalmique 30 dans son cercle 11.

En pratique, le nouveau rapport k₂ sera calculé selon la formule suivante :
k₂ = k₁ si la monture de lunettes 10 est métallique, et
k₂ = k₁ + b si la monture de lunettes 10 est plastique, b étant une constante strictement positive obtenue de manière empirique.

Si le paramètre de correction P4 (relatif au mode de montage à froid ou à chaud de la lentille ophtalmique 30 dans le cercle 11) indique que la lentille ophtalmique 30 sera montée à chaud dans son cercle 11, le rapport k₂ peut être légèrement augmenté. Ce procédé de montage permet en effet un montage un peu plus serré de la lentille ophtalmique 30 dans son cercle 11.

En pratique, le nouveau rapport k₃ sera calculé selon la formule suivante :
k₃ = k₂ si le procédé de montage choisi est un « montage à froid », et
k₃ = k₂ + c si le procédé de montage choisi est un « montage à chaud » c étant une constante strictement positive obtenue de manière empirique.

Si le paramètre de correction P5 (relatif aux propriétés de réfringence de la lentille ophtalmique 30) indique que la lentille ophtalmique 30 présentera une fois détourée un bord d'épaisseur réduite, le rapport k₃ peut être légèrement augmenté. Cette faible épaisseur au bord de la lentille ophtalmique 30 lui conférera en effet une souplesse accrue, ce qui permettra un montage un peu plus serré de la lentille ophtalmique 30 dans son cercle 11.

En pratique, le nouveau rapport k sera calculé selon la formule suivante :
k = k₃ si la lentille présente une puissance sphérique positive, et
k = k₃ + d si la lentille présente une puissance sphérique négative d étant une constante strictement positive obtenue de manière empirique.

Dans les deux cas i) et ii) envisagés, on obtient ainsi un rapport k d'homothétie.

Ce rapport k peut être corrigé une dernière fois pour tenir compte de la volonté de l'utilisateur de monter la lentille ophtalmique 30 dans le cercle 11 de la monture de lunettes 10 avec ou sans jeu. Ainsi pourra-t-on retrancher à ce rapport k une constante e strictement positive (obtenue de manière empirique) si le paramètre de correction P7 indique que l'opticien souhaite monter la lentille avec un léger jeu.

Une fois ce rapport k fixé, le calculateur 140 calcule les coordonnées des 360 points du contour corrigé C1.

Au cours d'une dernière étape, le calculateur 140 élabore la consigne de biseautage CONS à partir de ce contour corrigé C1.

Pour cela, le calculateur 140 détermine les coordonnées spatiales de 360 points issus de la projection des 360 points du contour corrigé C1 sur une surface de référence prédéterminée.

Cette surface de référence prédéterminée est ici représentative de la forme de la face avant de la lentille ophtalmique 30. Elle est donc sphérique et présente un rayon de courbure que l'opticien aura au préalable renseigné sur l'écran d'affichage 104.

La projection est ici une projection orthogonale suivant l'axe Z2.

Ces 360 points définissent ainsi un contour tridimensionnel, qui correspond à la forme que devra présenter le sommet du biseau à former sur la tranche de la lentille ophtalmique 30.

Ce contour tridimensionnel constitue ainsi la consigne de biseautage CONS de la première lentille ophtalmique 30.

Le calculateur 140 procède ensuite au calcul de la consigne de biseautage CONS' de la seconde lentille ophtalmique 30.

Par mesure de simplification et de rapidité, ce calcul sera effectué sur la base, non pas d'une image de la seconde lentille de présentation 20, mais plutôt sur la base d'une symétrie du contour initial C0.

Les paramètres de correction seront ensuite utilisés pour corriger cette symétrie du contour initial C0, afin d'aboutir à un contour corrigé C1'.

On notera qu'en général, puisque les paramètres de correction affectés aux deux lentilles sont différents, les deux contours corrigés C1, C1' ne seront pas symétriques.

La présente invention n'est nullement limitée au mode de réalisation décrit et représenté, mais l'homme du métier saura y apporter toute variante conforme à son esprit.

Le rapport d'homothétie k pourra notamment être affiné en fonction d'autres paramètres.

Il pourra ainsi par exemple être corrigé selon que le contour initial est considéré plutôt rond ou carré. En effet, si le contour initial est plutôt carré, on sait que le biseau de la lentille ophtalmique risquera d'être rogné en cours d'usinage, ce qui réduira au final le périmètre de la lentille ophtalmique. Dans ce cas, on pourra prévoir, en prévision de cette réduction de périmètre, de réduire le rapport d'homothétie k d'une constante non nulle obtenue de manière empirique.

Selon une autre variante, le contour final pourra être obtenu au moyen d'une déformation du contour initial qui ne sera pas une homothétie. Ainsi, le contour final pourra être obtenu en déformant le contour initial uniquement en largeur (selon X2), la hauteur (selon Y2) étant conservée.

Selon une autre variante, le paramètre utilisé pour estimer l'épaisseur au bord de la lentille ophtalmique pourra être, non pas la puissance sphérique de la lentille, mais plutôt une donnée saisie par l'opticien selon qu'il estime que la lentille présentera ou non une tranche épaisse.

Selon une autre variante de l'invention, pour acquérir le paramètre de correction (relatif au jeu entre le cercle et la lentille de présentation), on aurait pu prévoir que le calculateur offre un choix plus vaste à l'opticien, en affichant par exemple cinq boutons sur lesquels apparaitraient les mentions « montage trop serré », « aucun jeu », « faible jeu », « jeu moyen », et « jeu important ». Dans le cas où le bouton « montage trop serré » serait sélectionné, on pourra alors prévoir d'affecter au rapport k₀ la valeur 0,09.

Selon un autre mode de réalisation de l'invention, on pourra prévoir que les valeurs affectées aux rapports k₀ et aux coefficients a, b, c et d soient, non pas prédéterminées, mais qu'elles puissent évoluer grâce à un apprentissage du centreur-bloqueur 100.

Dans cet autre mode de réalisation, on pourra prévoir qu'à la livraison, les valeurs affectées aux rapports k₀ et aux coefficients a, b, c et d soient légèrement supérieures à celles utilisées dans le premier mode de réalisation exposé ci-dessus.

Il s'ensuivra généralement, au cours des premiers cycles d'utilisation du dispositif centreur-bloqueur 100, des impossibilités de montage des lentilles ophtalmiques 30 biseautées dans leurs montures de lunettes 10.

L'opticien sera alors forcé de reprendre le biseautage de chaque lentille ophtalmique 30 de manière à permettre son montage dans la monture de lunettes 10. Lors de cette reprise d'usinage, l'opticien pourra notamment détourer la lentille ophtalmique 30 de telle manière qu'elle soit montable dans son cercle 11 avec ou sans jeu, selon sa préférence.

Dans ce mode de réalisation, le dispositif centreur-bloqueur 100 tirera part de cette reprise d'usinage pour ajuster au mieux les valeurs affectées aux rapports k₀ et aux coefficients a, b, c et d.

Avant de monter la lentille ophtalmique 30 re-détourée dans la monture de lunettes 10, l'opticien placera alors cette lentille ophtalmique 30 sur le trépied 1 du dispositif centreur-bloqueur 100, de manière que le calculateur 140 puisse acquérir le contour repris C2 de la lentille ophtalmique 30.

Le calculateur 140 pourra alors comparer ce contour repris C2 avec le contour corrigé C1.

Il pourra notamment calculer le rapport kᵣ qu'il aurait fallu affecter au contour initial C0 pour obtenir un contour final permettant un montage du premier coup de la lentille ophtalmique 30 dans son cercle 11 de monture de lunettes 10.

Le calculateur 140 mémorisera alors à chaque cycle la différence Δk entre le rapport k qu'il avait affecté initialement et le rapport kr.

Le calculateur 140 pourra ainsi corriger sa méthode de calcul du rapport k, de manière à pourvoir, à terme, obtenir des lentilles détourées qui soient montables dans leurs montures du premier coup et qui satisfassent en outre l'opticien du point de vue de sa préférence de montage avec ou sans jeu.

Plus précisément, le calculateur 140 pourra corriger le rapport k avant son envoi à la meuleuse, en fonction des différences Δk mémorisées au cours des cycles précédent.

Il pourra sinon modifier chacune des valeurs affectées aux rapports k₀ et aux coefficients a, b, c et d en fonction des différences Δk mémorisées. Cette seconde méthode sera plus précise et permettra d'aboutir à de meilleurs résultats à long terme. Elle demandera toutefois un apprentissage plus long, et donc un plus grand nombre de reprises d'usinage à court terme.

## Revendications

1. Procédé d'élaboration d'une consigne de biseautage (CONS) d'une lentille ophtalmique (30), en vue de son montage dans un entourage (11) d'une monture de lunettes (10) dans lequel est initialement emboîtée une lentille de présentation (20) biseautée, comportant des étapes consistant à :
a) acquérir un paramètre de correction (P1) relatif au jeu entre l'entourage (11) et la lentille de présentation (20),
b) capturer une image faciale de la lentille de présentation (20) préalablement extraite de l'entourage (11),
c) déterminer, sur ladite image faciale, un contour initial (C0) de ladite lentille de présentation (20),
d) calculer un contour corrigé (C1), en corrigeant le contour initial (C0) en fonction dudit paramètre de correction (P1), et
e) déduire ladite consigne de biseautage (CONS) en fonction dudit contour corrigé (C1).

2. Procédé selon la revendication précédente, dans lequel, ladite monture de lunettes (10) comportant un second entourage (11) dans lequel est initialement emboîtée une seconde lentille de présentation (20) :
- à l'étape a), on acquiert un second paramètre de correction (P1) relatif au jeu entre le second entourage (11) et la seconde lentille de présentation (20), et
- à l'étape d), on calcule un second contour corrigé (C1) en opérant une symétrie et une correction dudit contour initial (C0) en fonction dudit second paramètre de correction (P1).

3. Procédé selon l'une des revendications précédentes, dans lequel, à l'étape a), le paramètre de correction (P1) est sélectionné dans une liste comprenant entre trois et cinq valeurs.

4. Procédé selon l'une des revendications précédentes, dans lequel, à l'étape d), le contour corrigé (C1) est calculé en fonction d'un autre paramètre de correction (P2) relatif au matériau de la lentille ophtalmique (30).

5. Procédé selon l'une des revendications précédentes, dans lequel, à l'étape d), le contour corrigé (C1) est calculé en fonction d'un autre paramètre de correction (P3) relatif au matériau de la monture de lunettes.

6. Procédé selon l'une des revendications précédentes, dans lequel, à l'étape d), le contour corrigé (C1) est calculé en fonction d'un autre paramètre de correction (P4) relatif au mode de montage prévu, à froid ou à chaud, de la lentille ophtalmique (30) dans l'entourage (11) de la monture de lunettes (10).

7. Procédé selon l'une des revendications précédentes, dans lequel, à l'étape d), le contour corrigé (C1) est calculé en fonction d'un autre paramètre de correction (P5) relatif à la puissance optique de la lentille ophtalmique (30).

8. Procédé selon l'une des revendications précédentes, dans lequel, à l'étape d), le contour corrigé (C1) est calculé en fonction d'un autre paramètre de correction (P6) relatif à l'épaisseur de la lentille ophtalmique (30).

9. Procédé selon l'une des revendications précédentes, dans lequel, à l'étape d), le contour corrigé (C1) est calculé en fonction d'un autre paramètre de correction (P7) relatif à la volonté de l'utilisateur de monter la lentille ophtalmique (30) dans l'entourage (11) de la monture de lunettes (10) avec ou sans jeu.

10. Procédé selon l'une des revendications précédentes, dans lequel, à l'étape b), ladite image faciale de la lentille de présentation (20) est acquise au moyen d'un dispositif centreur (100) qui comporte :
- un support (1) pour la lentille de présentation (20)
- d'un côté de ce support (1), une plaque réfléchissante, et
- de l'autre côté de ce support (1), des moyens d'éclairage (121) et des moyens de capture d'image (133).

11. Méthode de préparation d'une lentille ophtalmique (30) en vue de son montage dans un entourage (11) d'une monture de lunettes (10) dans lequel est initialement emboîtée une lentille de présentation (20) biseautée, comprenant :
- une étape d'élaboration d'une consigne de biseautage (CONS) de la lentille ophtalmique (30) selon un procédé conforme à l'une des revendications précédentes, au cours duquel le contour corrigé (C1) est calculé en fonction d'au moins un coefficient (k₀) déduit dudit paramètre de correction (P1), où le coefficient k₀ est égale à 1,015 pour un jeu réduit et égale à 1,025 pour un jeu important,
- une étape de biseautage de la lentille ophtalmique (30) selon la consigne de biseautage (CONS), puis, si la lentille ophtalmique (30) n'est pas adaptée à être montée dans l'entourage (11),
- une étape de reprise du biseautage de la lentille ophtalmique (30) de telle manière qu'elle soit adaptée à être montée dans l'entourage (11),
- une étape de capture d'une image faciale de la lentille ophtalmique (30) reprise,
- une étape de détermination, sur ladite image faciale, d'un contour repris (C2) de ladite lentille ophtalmique (30) reprise,
- une étape de correction dudit coefficient (k₀) en fonction de la différence entre le contour repris (C2) et le contour corrigé (C1).

## Patentansprüche

1. Verfahren zur Bestimmung eines Sollwertes der Abfasung (CONS) einer ophthalmischen Linse (30) im Hinblick auf ihre Anbringung in einer Fassung (11) eines Brillengestells (10), in welche ursprünglich ein abgefastes Präsentationsglas (20) eingesetzt ist, Schritte umfassend, die in Folgendem bestehen:
a) Erfassen eines Korrekturparameters (P1), der das Spiel zwischen der Fassung (11) und dem Präsentationsglas (20) betrifft,
b) Aufnehmen eines Gesichtsbildes des Präsentationsglases (20), das zuvor aus der Fassung (11) entnommen wurde,
c) Bestimmen, auf dem Gesichtsbild, einer Anfangskontur (C0) des Präsentationsglases (20),
d) Berechnen einer korrigierten Kontur (C1) durch Korrigieren der Anfangskontur (C0) in Abhängigkeit von dem Korrekturparameter (P1), und
e) Ableiten des Sollwertes der Abfasung (CONS) in Abhängigkeit von der korrigierten Kontur (C1).

2. Verfahren nach dem vorhergehenden Anspruch, wobei, wenn das Brillengestell (10) eine zweite Fassung (11) aufweist, in welche ursprünglich ein zweites Präsentationsglas (20) eingesetzt ist:
- in Schritt a) ein zweiter Korrekturparameter (P1) erfasst wird, der das Spiel zwischen der zweiten Fassung (11) und dem zweiten Präsentationsglas (20) betrifft, und
- in Schritt d) eine zweite korrigierte Kontur (C1) berechnet wird, indem eine Symmetrie und eine Korrektur der Anfangskontur (C0) in Abhängigkeit von dem zweiten Korrekturparameter (P1) ausgeführt werden.

3. Verfahren nach einem der vorhergehenden Ansprüche, wobei in Schritt a) der Korrekturparameter (P1) aus einer Liste ausgewählt wird, die drei bis fünf Werte umfasst.

4. Verfahren nach einem der vorhergehenden Ansprüche, wobei in Schritt d) die korrigierte Kontur (C1) in Abhängigkeit von einem weiteren Korrekturparameter (P2) berechnet wird, der das Material der ophthalmischen Linse (30) betrifft.

5. Verfahren nach einem der vorhergehenden Ansprüche, wobei in Schritt d) die korrigierte Kontur (C1) in Abhängigkeit von einem weiteren Korrekturparameter (P3) berechnet wird, der das Material des Brillengestells betrifft.

6. Verfahren nach einem der vorhergehenden Ansprüche, wobei in Schritt d) die korrigierte Kontur (C1) in Abhängigkeit von einem weiteren Korrekturparameter (P4) berechnet wird, der die Art der vorgesehenen Anbringung, im Kaltverfahren oder im Warmverfahren, der ophthalmischen Linse (30) in der Fassung (11) des Brillengestells (10) betrifft.

7. Verfahren nach einem der vorhergehenden Ansprüche, wobei in Schritt d) die korrigierte Kontur (C1) in Abhängigkeit von einem weiteren Korrekturparameter (P5) berechnet wird, der die optische Leistung der ophthalmischen Linse (30) betrifft.

8. Verfahren nach einem der vorhergehenden Ansprüche, wobei in Schritt d) die korrigierte Kontur (C1) in Abhängigkeit von einem weiteren Korrekturparameter (P6) berechnet wird, der die Dicke der ophthalmischen Linse (30) betrifft.

9. Verfahren nach einem der vorhergehenden Ansprüche, wobei in Schritt d) die korrigierte Kontur (C1) in Abhängigkeit von einem weiteren Korrekturparameter (P7) berechnet wird, der den Wunsch des Benutzers betrifft, die ophthalmische Linse (30) in der Fassung (11) des Brillengestells (10) mit oder ohne Spiel zu tragen.

10. Verfahren nach einem der vorhergehenden Ansprüche, wobei in Schritt b) das Gesichtsbild des Präsentationsglases (20) mittels einer Zentriervorrichtung (100) erfasst wird, welche aufweist:
- eine Halterung (1) für das Präsentationsglas (20),
- auf einer Seite dieser Halterung (1) eine reflektierende Platte und
- auf der anderen Seite dieser Halterung (1) Beleuchtungsmittel (121) und Bildaufnahmemittel (133) .

11. Verfahren zur Vorbereitung einer ophthalmischen Linse (30) im Hinblick auf ihre Anbringung in einer Fassung (11) eines Brillengestells (10), in welche ursprünglich ein abgefastes Präsentationsglas (20) eingesetzt ist, umfassend:
- einen Schritt der Bestimmung eines Sollwertes der Abfasung (CONS) der ophthalmischen Linse (30) gemäß einem Verfahren nach einem der vorhergehenden Ansprüche, in welchem die korrigierte Kontur (C1) in Abhängigkeit von wenigstens einem von dem Korrekturparameter (P1) abgeleiteten Koeffizienten (k₀) berechnet wird, wobei der Koeffizient k₀ gleich 1,015 für ein geringes Spiel und gleich 1,025 für ein großes Spiel ist,
- einen Schritt der Abfasung der ophthalmischen Linse (30) gemäß dem Sollwert der Abfasung (CONS), anschließend, falls die ophthalmische Linse (30) nicht geeignet ist, in der Fassung (11) angebracht zu werden,
- einen Schritt der Nachbearbeitung der Abfasung der ophthalmischen Linse (30), derart, dass sie geeignet ist, in der Fassung (11) angebracht zu werden,
- einen Schritt des Aufnehmens eines Gesichtsbildes der nachbearbeiteten ophthalmischen Linse (30),
- einen Schritt der Bestimmung, auf dem Gesichtsbild, einer nachbearbeiteten Kontur (C2) der nachbearbeiteten ophthalmischen Linse (30),
- einen Schritt der Korrektur des Koeffizienten (k₀) in Abhängigkeit von der Abweichung zwischen der nachbearbeiteten Kontur (C2) und der korrigierten Kontur (C1).

## Claims

1. A method for working out a setting (CONS) for beveling an ophthalmic lens (30), with a view to its insertion in an eyewire (11) of a spectacle frame (10) in which a beveled demonstration lens (20) is initially mounted, including steps consisting in:
a) acquiring a correctional parameter (P1) relating to the play between the eyewire (11) and the demonstration lens (20);
b) capturing a front-on image of the demonstration lens (20) extracted beforehand from the eyewire (11);
c) determining, in said front-on image, an initial outline (C0) of said demonstration lens (20);
d) calculating a corrected outline (C1), by correcting the initial outline (C0) depending on said correctional parameter (P1); and
e) deducing said beveling setting (CONS) depending on said corrected outline (C1).

2. The method as claimed in the preceding claim, wherein, said spectacle frame (10) including a second eyewire (11) in which a second demonstration lens (20) is initially mounted:
- in step a), a second correctional parameter (P1) relating to the play between the second eyewire (11) and the second demonstration lens (20) is acquired; and
- in step d), a second corrected outline (C1) is calculated by operating a symmetry of and correcting said initial outline (C0) depending on said second correctional parameter (P1).

3. The method as claimed in one of the preceding claims, wherein, in step a), the correctional parameter (P1) is selected from a list comprising between three and five values.

4. The method as claimed in one of the preceding claims, wherein, in step d), the corrected outline (C1) is calculated depending on another correctional parameter (P2) relating to the material of the ophthalmic lens (30).

5. The method as claimed in one of the preceding claims, wherein, in step d), the corrected outline (C1) is calculated depending on another correctional parameter (P3) relating to the material of the spectacle frame.

6. The method as claimed in one of the preceding claims, wherein, in step d), the corrected outline (C1) is calculated depending on another correctional parameter (P4) relating to the hot or cold insertion mode expected to be used to insert the ophthalmic lens (30) in the eyewire (11) of the spectacle frame (10).

7. The method as claimed in one of the preceding claims, wherein, in step d), the corrected outline (C1) is calculated depending on another correctional parameter (P5) relating to the optical power of the ophthalmic lens (30).

8. The method as claimed in one of the preceding claims, wherein, in step d), the corrected outline (C1) is calculated depending on another correctional parameter (P6) relating to the thickness of the ophthalmic lens (30).

9. The method as claimed in one of the preceding claims, wherein, in step d), the corrected outline (C1) is calculated depending on another correctional parameter (P7) relating to whether the user wants the ophthalmic lens (30) to fit in the eyewire (11) of the spectacle frame (10) with or without play.

10. The method as claimed in one of the preceding claims, wherein, in step b), said front-on image of the demonstration lens (20) is acquired by means of a centering device (100) that includes:
- a holder (1) for the demonstration lens (20);
- on one side of this holder (1), a reflective plate; and
- on the other side of this holder (1), illuminating means (121) and image-capturing means (133).

11. A method for preparing an ophthalmic lens (30) with a view to its insertion in an eyewire (11) of a spectacle frame (10) in which a beveled demonstration lens (20) is initially mounted, comprising:
- a step of working out a setting (CONS) for beveling the ophthalmic lens (30) using a method as claimed in one of the preceding claims, in which the corrected outline (C1) is calculated depending on at least one coefficient (k₀) deduced from said correctional parameter (P1), said coefficient (k₀) being equal to 1,015 for a little play and to 1,025 for a substantial play ;
- a step of beveling the ophthalmic lens (30) according to the beveling setting (CONS), then, if the ophthalmic lens (30) is not suitable for insertion in the eyewire (11);
- a step of reworking the bevel of the ophthalmic lens (30) in such a way that it is made suitable for insertion in the eyewire (11);
- a step of capturing a front-on image of the reworked ophthalmic lens (30);
- a step of determining, in said front-on image, a reworked outline (C2) of said reworked ophthalmic lens (30);
- a step of correcting said coefficient (k₀) depending on the difference between the reworked outline (C2) and the corrected outline (C1).
